# EUROPEAN PATENT SPECIFICATION

(11) **EP 1 949 688 B1**
(45) Date of publication and mention of the grant of the patent: **15.05.2013**
(21) Application number: 06850128.7
(22) Date of filing: 09.11.2006
(51) Int. Cl.: H04L 12/18, H04N 21/472, H04N 21/436, H04N 21/438, H04N 21/6405, H04N 21/647, H04N 7/173

(54) **ATOMIC CHANNEL CHANGES IN A SWITCHED DIGITAL VIDEO SYSTEM**
AUTOMATISCHER KANALWECHSEL IN EINEM GESCHALTETEN DIGITALEN VIDEOSYSTEM
CHANGEMENTS DE CHAÎNE ATOMIQUE DANS UN SYSTÈME VIDÉO NUMÉRIQUE COMMUTÉ

(30) Priority: 10.11.2005 US 164115
(43) Date of publication of application: 30.07.2008
(73) Proprietor: Cisco Technology, Inc., San Jose, CA 95134 (US)
(72) Inventor: VERSTEEG, William C., Alpharetta, Georgia 30022 (US); WALL, William E., Atlanta, Georgia 30307 (US); ROVIRA, Luis A., Atlanta, Georgia 30345 (US); MORSE, Ken, Duluth GA 30097 (US)
(74) Representative: MacDougall, Alan John Shaw
(86) International application number: PCT/US2006/060695
(87) International publication number: WO 2007/111693

(56) References cited:
- EP-A- 1 335 521
- EP-A- 1 589 706
- SHOAF S ET AL: "IGMP Capabilities in Broadband Network Architectures" WHITEPAPER JUNIPER NETWORKS, XX, XX, 1 March 2005 (2005-03-01), pages 1-25, XP002999116
- CAIN CEREVA NETWORKS S DEERING I KOUVELAS CISCO SYSTEMS B FENNER AT&T LABS-RESEARCH A THYAGARAJAN ERICSSON B: "Internet Group Management Protocol, Version 3; rfc3376.txt" IETF STANDARD, INTERNET ENGINEERING TASK FORCE, IETF, CH, 1 October 2002 (2002-10-01), XP015009135 ISSN: 0000-0003

## Description

### FIELD OF THE INVENTION

This invention relates in general to broadband communications systems, and more particularly, to the use of a switched digital video system to change between services with differing bandwidths in a local home network.

### BACKGROUND

A broadband communications system includes data sources, a broadcasting network, a headend unit, and edge devices. The data sources can be encoders and video sources that send data through an uplink to the broadcasting network. In the broadcasting network, three common types of signals received at the headend include off-air signals, satellite signals, and local origination signals. The satellite signals include any signal transmitted from an earth station to an orbiting satellite which are then retransmitted back down to earth. The signals are transmitted from earth to the orbiting satellite on a path referred to as the uplink. These signals are then received by a transponder on the satellite and are retransmitted from the transponder to a receiving earth station over a downlink. The transponder amplifies the incoming signal and changes its frequency for the downlink journey to avoid interference with uplink signals.

The headend (HE) or central office is where signals from multiple sources are received and are conditioned and prepared for transmission over an access network to subscribers. Once signals have been prepared for delivery, they are combined onto a medium to be sent over the access network to the customer premise devices.
Conditioning may include conversion of analog to digital, digital bit-rate conversion, conversion from variable bit rate to constant or clamped bit rate, conversion of multiple-program transport streams to single-program transport streams or any other type of grooming or combination of these. The medium may include coaxial, twisted pair or other cable, optical fiber, or some form of wireless transmission. The preparation for transmission in edge devices may include generation of an RF carrier, modulation, conversion to optical, frequency division multiplexing, time division multiplexing, wavelength division multiplexing or any combination of these.

Edge devices vary depending on the type of network, and include the headend output devices. These edge devices sometime overlap with or extend into an access network. The fiber access network can include an optical line terminal (OLT), an optical node terminal (ONT), and devices inside the home. Therefore, the OLT and ONT may be considered either an edge device or an access network device. However, the ONT may at times be considered a customer premises device. A hybrid fiber/coax (HFC) network typically uses modulator edge devices. An HFC access network can include RF to optical converters, optical to RF converters, optical and RF amplifiers, optical and RF combiners, splitters and taps. HFC customer premises devices include RF modems and set-top boxes. A digital subscriber line (DSL) network can include a digital subscriber line access multiplexer (DSLAM). DSL modems are usually located in customer premises. The OLTs, modulators, and DSLAMs, also known as edge devices, service numerous user homes, such as a neighborhood in a city. Customer premise devices can include modems, routers, personal computers, set-top boxes (STB), etc.

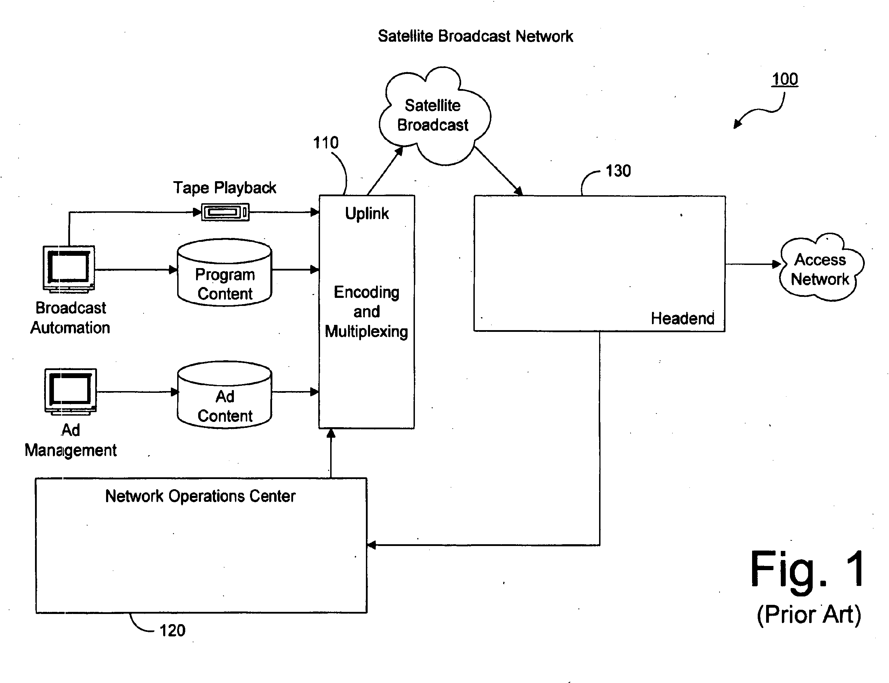

FIG. 1 illustrates a satellite broadcast network 100. At an uplink facility 110, program content is stored on video servers controlled by a broadcast automation system. Any analog content at a network operations center (NOC) 120 is compressed using encoders and then multiplexed with the content delivered from the video file servers. The NOC 120 is responsible for overall control and co-ordination of the uplink and the downlink sites. A headend (HE) 130 may include one or more server devices for providing broadband signals such as video, audio, and/or data signals. The headend 130 also has numerous decoders which preferably each have a mass storage device, such as a hard disk drive.

Broadband communications systems, such as satellite and cable television systems and DSL, are now capable of providing many services in addition to analog broadcast video, such as Video-on-Demand (VOD), personal video recording (PVR), HDTV, Interactive TV, Web TV, online gaming, telelearning, video conferencing, voice services, and high speed data services. With an increase in the number of services offered, the demand for bandwidth has drastically increased. A switched digital video (SDV) system is a technique that delivers selected services only to homes where and when users are actively requesting service. The switched digital video technique would be performed in SDV devices, which vary depending on the type of network. A common problem using the SDV technique is devices in a user's home requesting services requiring more bandwidth than can be provided. For example, this can occur when the request for one service to be stopped is not received by the SDV device, but the request for a new service to begin is received by the SDV device.

EP-A-1335521 discloses a method for facilitating a multicast group switch via a single Internet Group Management Protocol message. An operation is performed for receiving multicast information associated with a first multicast group and an operation is performed for receiving a request for receiving multicast information associated with a second multicast group. In response to receiving the request, an operation is performed for preparing an Internet Group Management Protocol (IGMP) Group Switch message.

EP-A-1589706 discloses a multicast traffic control unit for use in a data communication system operable to transmit multicast traffic, and adapted to receive membership reports from at least one station. The control unit estimates a total amount of multicast traffic which the multicast router would supposedly forward towards the at least one station on account of at least one membership, and selects the at least one membership such that the so-estimated total amount does not exceed a configurable threshold. At least one membership out of said memberships is reported to a multicast router of the data communication system.

"Internet Group Management Protocol, Version 3; rfc3376.text", IETF Standard, Internet Engineering Task Force, 1 Oct 2002, XP 015009135 ISSN: 0000-0003, discloses Version 3 of the Internet Group Management Protocol, IGMPv3. IGMP is the protocol used by IPv4 systems to report their IP multicast group memberships to neighbouring multicast routers. It discloses that IGMP messages may contain both auxiliary data fields and additional data fields.

The present invention provides a system for implementing IGMP-based channel changes within a broadcast system to prevent oversubscription, said system comprising a user device associated with a subscriber premises, the user device comprising means for receiving a user request for a change from a current channel to a requested channel; and means, responsive to the user request, for transmitting towards a switched digital video, SDV, device (830), an IGMP message requesting a channel change by leaving a current channel and joining a requested channel (920), the message comprising i) current channel data identifying the current channel; ii) requested channel data identifying the channel the user wishes to join; and, in addition iii) bandwidth data identifying a bandwidth requirement for the requested channel and a bandwidth requirement for the current channel. The system also comprises an SDV device comprising means for receiving the channel change request message transmitted by the user device; means for evaluating the received channel change request message by comparing the bandwidth requirement of the requested channel contained within the received message with a available bandwidth for the subscriber premises; and means for granting or denying the service in order to prevent oversubscription for the customer premises in dependence upon the evaluation made by said evaluating means wherein if the means for granting or denying the service of the SDV device grants the service, the SDV device is configured to terminate a current channel transmission from the SDV device and to transmit a requested channel transmission from the SDV device.

The invention also provides a switched digital video, SDV, device comprising: means for receiving an IGMP message requesting a channel change transmitted by a first user device associated with the subscriber premises, the message comprising: current channel data identifying a current channel; requested channel data identifying a channel the user wishes to join; and, in addition iii) bandwidth data identifying a bandwidth requirement for the requested channel and a bandwidth requirement for the current channel; means for evaluating the received channel request message by comparing the bandwidth requirement of the requested channel contained within the received message with an available bandwidth for the subscriber premises; and means for granting or denying the service of the SVD device in order to prevent oversubscription for the customer premises in dependence upon the evaluation made by said evaluating means; and wherein if the means for granting or denying the service grants the service, the SDV device is configured to terminate a current channel transmission from the SDV device and to transmit a requested channel transmission from the SDV device.

### BRIEF DESCRIPTION OF THE DRAWINGS

The invention can be better understood with reference to the following drawings.

The components in the drawings are not necessarily drawn to scale, emphasis instead being placed upon clearly illustrating the principles of the invention. In the drawings, like reference numerals designate corresponding parts throughout the several views.
FIG. 1 illustrates a satellite broadcast system with an uplink, headend, and network operations center.
FIG. 2 illustrates the system of FIG. 1 in combination with a fiber access network and a customer premises network.
FIG. 3 illustrates the system of FIG. 1 in combination with a hybrid fiber/coax access network and a customer premises network.
FIG. 4 illustrates the system of FIG. 1 in combination with a DSL access network and a customer premises network.
FIG. 5 illustrates a services map published by the headend.
FIG. 6 illustrates a group of STBs and PCs in a home.
FIG. 7 illustrates a quality of service priority table for services in a user's home.
FIG. 8 illustrates the prior art method of IGMP based channel changes in a broadcast system, including an error condition.
FIG. 9 illustrates a method of atomic channel change in a broadcast system according to the present invention.

### DETAILED DESCRIPTION

The embodiments of the invention can be understood in the context of a broadband communications system. Note, however, that the invention may be embodied in many different forms and should not be construed as limited to the embodiments set forth herein. For example, transmitted broadband signals may include at least one of video/audio, telephony, data, or Internet Protocol (IP) signals, to name but a few. All examples given herein, therefore, are intended to be non-limiting and are provided in order to help clarify the description of the invention.

A switched digital video system is a method of maximizing the number of services offered using a minimum of bandwidth. The switched digital video system allows chosen services from the HE 130 or central office to continually be sent to the subscriber premises, or the user's home, and other services to be switched in as requested by the user. For example, in a cable television system, a specified group of popular television channels is continually sent to every home in an access network subdivision regardless of what the user may want. When a user requests a channel not in this specified group, it is first checked to see if anyone else in the service group is watching the requested channel. If yes, then the requesting user is given access to the stream already carrying the requested channel. If not, the switch provides the requested stream to the required edge device and the system gives the requesting subscriber access to that stream. A switched digital video system can be used on many types of networks such as fiber, hybrid fiber/coax, and xDSL networks.

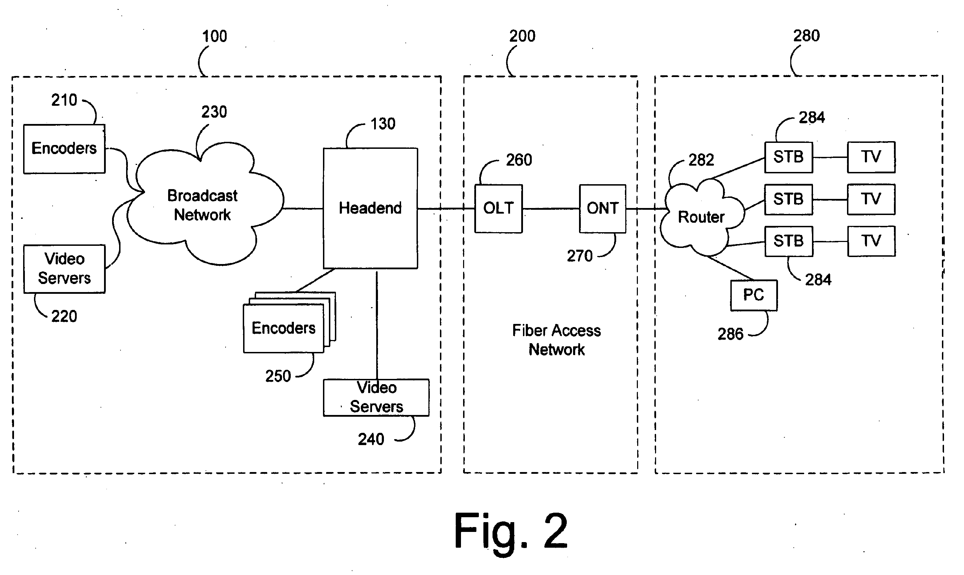

FIG. 2 illustrates the satellite broadcast system 100 of FIG. 1 in combination with a fiber access network 200 and a customer premises network 280. Encoders 210 and video servers 220 are the data sources that feed a broadcast network 230 of the satellite broadcast system 100. Video servers 240 and encoders 250 located at the HE 130 are used to insert local programming. The HE 130 of the satellite broadcast system 100 receives signals from multiple sources, conditions them and prepares them for transmission over the access network 200. Once signals have been prepared for transmission from the HE 130, they are combined onto the access network media. In a fiber access network 200 an optical line terminal (OLT) 260 transmits downstream to optical network terminals (ONT) 270 which are located outside the customer premises network 280. The OLT 260 is responsible for allocating necessary upstream bandwidths to the ONTs 270 by issuing data grants in an appropriate manner. Inside the customer premises network 280, the signals can be split and combined using a router 282, or other device, and then fed to various devices, such as one or more set-top boxes (STBs) 284 or personal computers (PCs) 286.

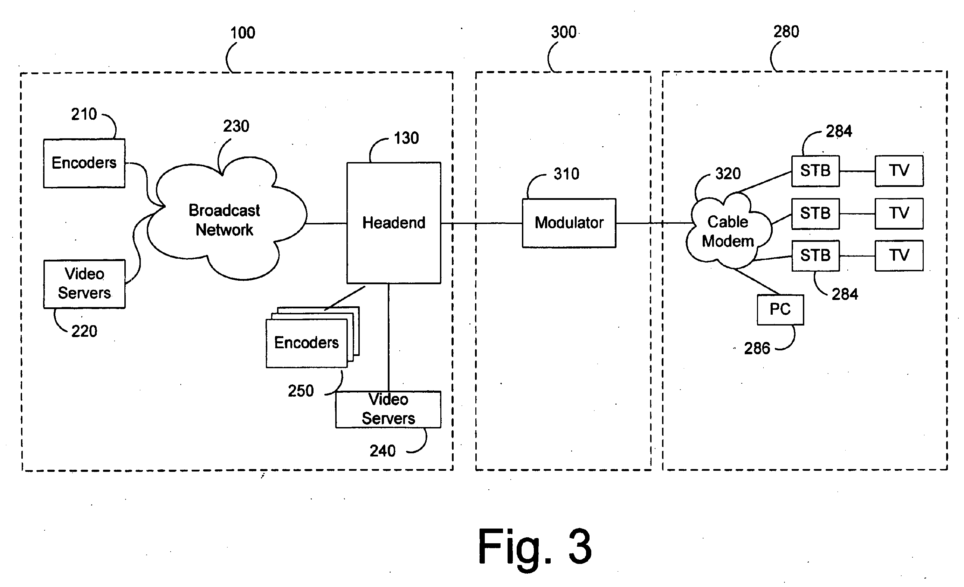

FIG. 3 illustrates the satellite broadcast system 100 of FIG. 1 in combination with a hybrid fiber/coax (HFC) access network 300 and the customer premises network 280. The components used for the HFC access network 300 are similar to those used for the fiber access network 200. However, instead of the OLT 260 and the ONT 270, the hybrid fiber/coax network 300 uses an edge modulator 310. Inside the customer premises network 280, the signal is received by a cable modem 320 and sent to various devices, such as one or more STBs 284 or PCs 286. RF STBs may interface to the HFC access network 300 directly using internal modems.

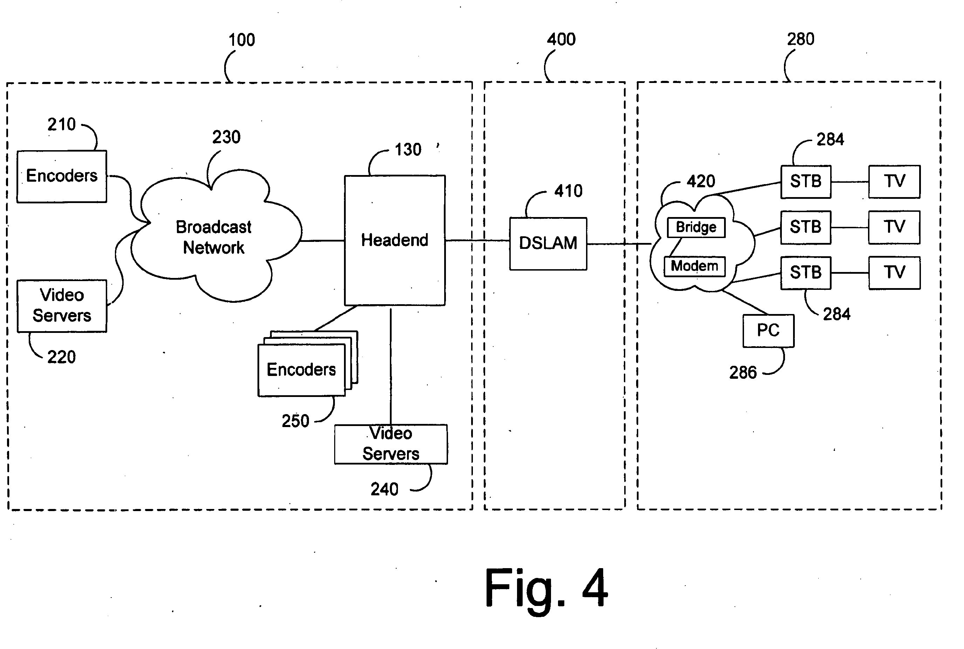

FIG. 4 illustrates the satellite broadcast system 100 of FIG. 1 in combination with a DSL access network 400 and the customer premises network 280. The components used for the DSL access network 400 are similar to those used in the fiber access network 200 and the HFC access network 300 except for the edge devices. Instead of the OLT 260 and the ONT 270 or the modulator 310, the DSL access network 400 has a digital subscriber line access multiplexer (DSLAM) 410 that links numerous users to a single high-speed ATM line. Inside the customer premises network 280, the signal is received by a local network 420 possibly containing a modem and bridge router. The signal is split there and fed to various devices, such as one or more STBs 284 or PCs 286.

The switched digital video technique would be performed in SDV devices, such as the OLT 260, DSLAM 410, modulator 310 or a router feeding the modulator 310, depending on the type of network. A common problem using the SDV technique occurs when devices in a user's home request services requiring more aggregate bandwidth than can be provided. The SDV devices can not currently track the bandwidth being requested, so an attempt is made to honor all requests. This results in oversubscribing and a loss of packets.

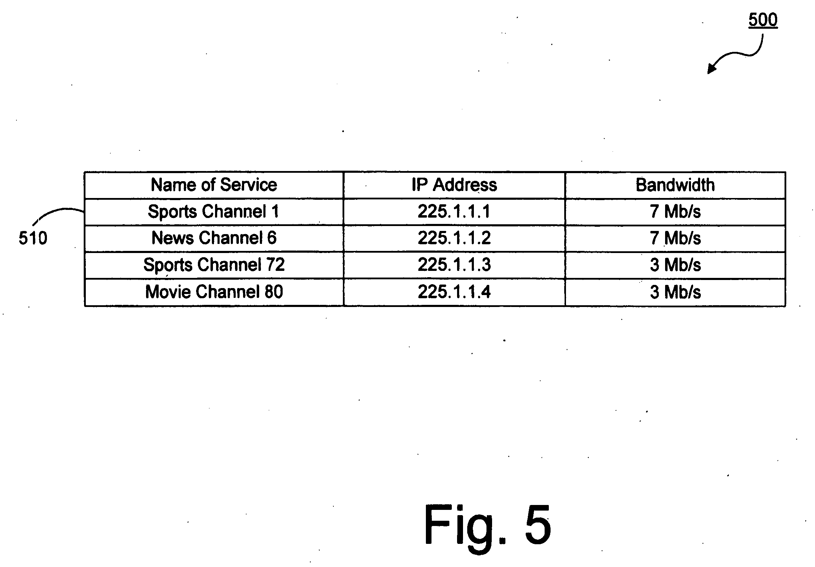

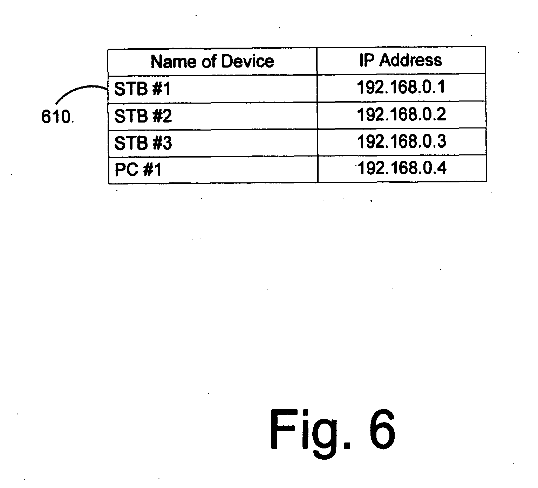

When a device in the user's home requests a change in service that will affect the bandwidth required, the change will be subject to a system resource management validation. For SDV devices to evaluate bandwidth requests and availability, the HE 130 can publish a services map 500, as shown in FIG. 5, prepared by the system operator. The map will be put in a multicast group, which is a group of different services, and the STB in the home will know to join the multicast containing the services map first. The STB will then distribute the map to the other devices in the home. As shown in FIG. 6, each SDV device and each device in the home will have an identifier, such as an IP address, which will allow them to differentiate themselves from one another. The devices in the home will use the information in the services map to provide the SDV devices with the requesting IP address and the required bandwidth. For example, STB number 1 with reference number 610 is located at IP address 192.168.0.1 and is tuned to the service "Sports Channel 1" shown as reference number 510 at IP address 225.1.1.1 requiring 7 Mb/s of bandwidth. The SDV devices have the ability to evaluate the request from the devices in the home by comparing the requested bandwidth to the available bandwidth for the subscriber premises. The SDV devices can either grant or deny the service in order to prevent oversubscription and a loss of packets.

In another implementation, the SDV devices and all the devices in the users' home can correlate a request for service to the bandwidth available to each home. A bandwidth management status is the required bandwidth of a request correlated to the available bandwidth in the home. Each device has its own upper limit or choke point. The SDV devices and the home devices parse the service request packets before sending them upstream and adding their bandwidth management status (the requested bandwidth correlated to the available bandwidth) to the request. If any device does not have adequate bandwidth, it sends a message to the requesting device indicating an error condition.

Internet group management protocol (IGMP) is a standard used to communicate between an IP host, such as the SDV devices, and the neighborhood multicast agents to support allocation of temporary group addresses and the addition and deletion of members of the group. In this embodiment, the bandwidth can be managed by having a field in the IGMP request for adding the bandwidth management status at each intervening point, or at each device. In normal IGMP, only the IGMP endpoint is an active component. In this implementation, however, the IGMP endpoint, the SDV device, and any of the devices in the user's home can read and evaluate the incoming requests in order to deny or pass on the request upstream.

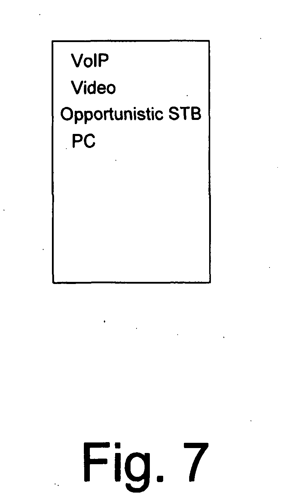

In the event of oversubscription, it is possible to place a quality of service (QOS) priority status on each request. This QOS priority status scheme is set up by the system operator. As the IGMP request passes from device to device, each device needs to be able to specify the required QOS for the requested stream. For example as shown in FIG. 7, in a multicast group, voice over IP (VOIP) streams may require a higher priority than video which has a higher priority than web surfing, which is an opportunistic STB function.

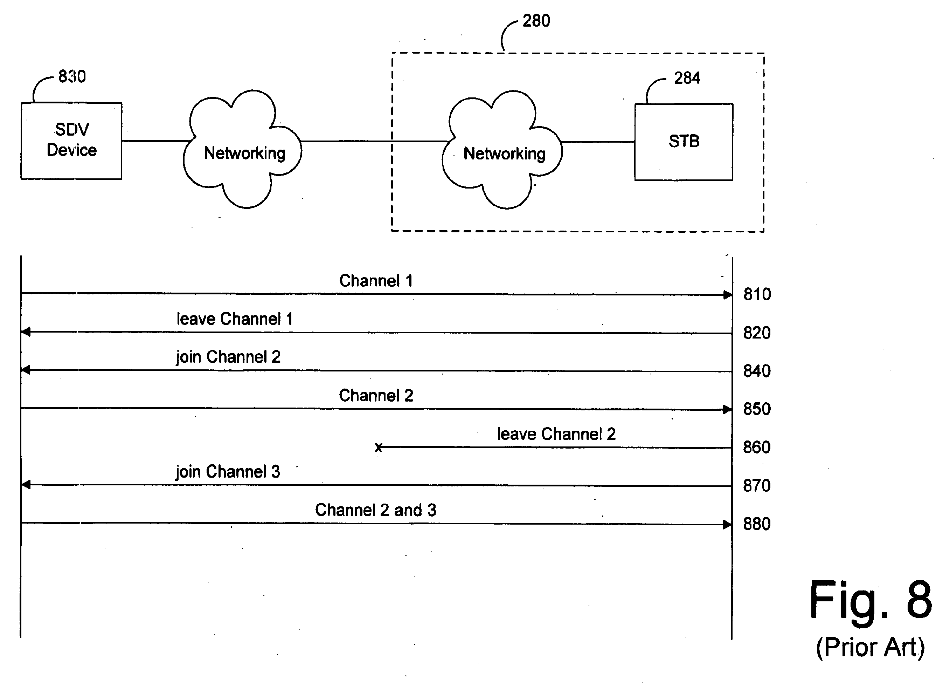

FIG. 8 illustrates the current method of IGMP based channel changes in a broadcast system. Joining and leaving multicast groups are currently two independent transactions. The joining message is a request for a new channel and the leaving message is a request to terminate a current channel. For example, if a user is currently watching channel 1, as shown in reference number 810, and wants to watch channel 2, then a channel change must occur. First, a "leave channel 1" transaction 820 is sent to a SDV device 830. Then, a "join channel 2" transaction 840 is also sent to the SDV device 830. Channel 2, shown in reference number 850, is now being sent to a STB 284 in the user's home 280. This is a correct channel change.

Either of these transactions can be dropped by the network. A dropped transaction can lead to oversubscription. For example, if a user wants to change channels from channel 2 to channel 3, a "leave channel 2" transaction 860 is sent to the SDV device 830. If the transaction 860 is dropped, then channel 2 is still being sent to the STB 284. A "join channel 3" transaction 870 is also sent to the SDV device 830. The SDV device 830 will attempt to send both channels 2 and 3, as shown in reference number 880, which will cause an oversubscription.

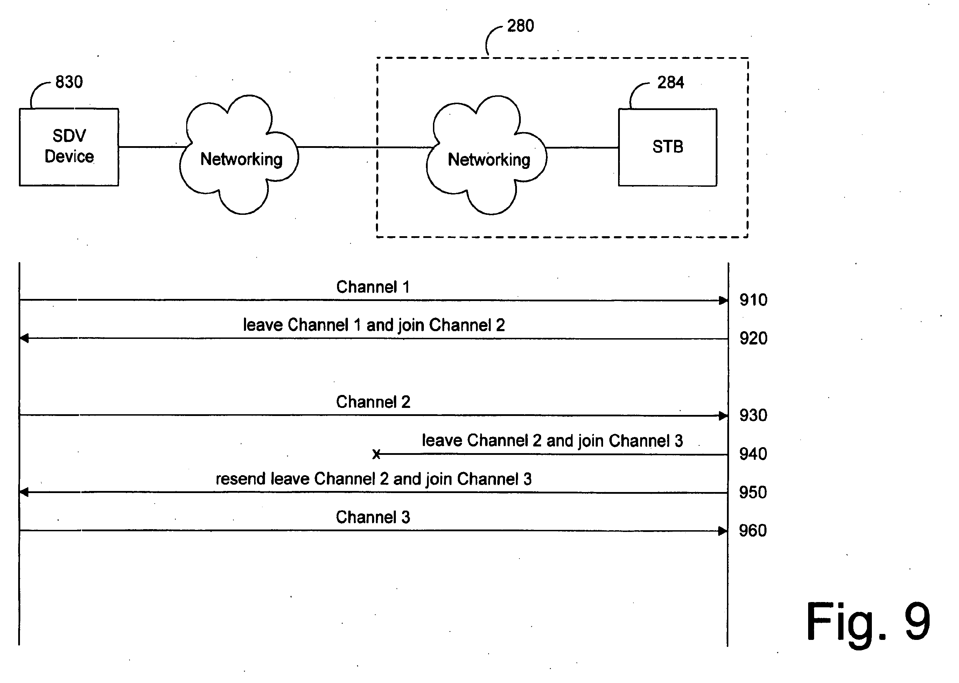

FIG. 9 illustrates a method of atomic channel change in a broadcast system according to the present invention. In this embodiment, a new IGMP message is defined that explicitly lists the streams that the STB 284 wants to receive and simultaneously requests a join and leave transaction. For example, if a user is currently watching channel 1, shown in reference number 910, and decides to watch channel 2, then a channel change must occur. The STB 284 sends a message to the SDV device 830 that contains a "leave channel 1 and join channel 2" transaction 920. Channel 2, shown in reference number 930, is now being sent to the STB 284 in the user's home 280. This is a correct channel change. Also, if a user wants to change channels from channel 2 to channel 3, a "leave channel 2 and join channel 3" transaction 940 is sent to the SDV device 830. If the transaction 940 is dropped, then no change occurs and, because STB 284 never received channel 3, the STB 284 resends the "leave channel 2 and join channel 3" in transaction 950. The STB 284 may wait to receive channel 3 for a specified period of time before resending the "leave channel 2 and join channel 3" transaction 950. Alternately, if the user reiterates the channel change request, the STB 284 may resend the "leave channel 2 and join channel 3" transaction 950. The SDV device 830 is now sending channel 3, as shown in reference number 960, to the STB 284.

IGMP messages, such as join and leave messages, can be updated or modified to include bandwidth requirements of both the join and leave channels. For example, channel 1, as shown in reference number 910, may require a bandwidth of 3 Mb/s and channel 2, as shown in reference number 930, may require a bandwidth of 6 Mb/s. The SDV device can compare the available bandwidth in the local network to the required bandwidth for channel 2 before performing the channel change. This would allow the SDV devices to more accurately determine which services can be sent to a user's home without oversubscription occurring and return an error message to the requesting device if service is not possible.

The numerous services offered by broadband communications systems continue to grow. With an increase in the number of services offered and the number of users subscribing, the demand for bandwidth has drastically increased. When more bandwidth is requested than can be provided, oversubscription occurs. One method to prevent this from happening is altering the IGMP messages used to request a channel change. Instead of two separate messages, a leave and join message, one message containing both the join and leave message is sent from the STB to the SDV device. This prevents a joining from occurring without a leave and, therefore, prevents oversubscription.

It should be emphasized that the above-described embodiments of the invention are merely possible examples, among others, of the implementations, setting forth a clear understanding of the principles of the invention. Many variations and modifications may be made to the above-described embodiments of the invention without departing substantially from the principles of the invention. All such modifications and variations are intended to be included herein within the scope of the disclosure and invention and protected by the following claims. In addition, the scope of the invention includes embodying the functionality of the embodiments of the invention in logic embodied in hardware and/or software-configured mediums.

## Claims

1. A system for implementing IGMP-based channel changes within a broadcast system to prevent oversubscription, said system comprising:
a user device (284) associated with a subscriber premises, the user device comprising:
means for receiving a user request for a change from a current channel to a requested channel; and
means, responsive to the user request, for transmitting towards a switched digital video, SDV, device (830), an IGMP message requesting a channel change by leaving a current channel and joining a requested channel (920), the message comprising:
i) current channel data identifying the current channel;
ii) requested channel data identifying the channel the user wishes to join; and, in addition
iii) bandwidth data identifying a bandwidth requirement for the
requested channel and a bandwidth requirement for the current channel;
an SDV device (830) comprising:
means for receiving the channel change request message (920) transmitted by the user device (284);
means for evaluating the received channel change request message by comparing the bandwidth requirement of the requested channel contained within the received message with a available bandwidth for the subscriber premises; and
means for granting or denying the service in order to prevent oversubscription for the customer premises in dependence upon the evaluation made by said evaluating means;
wherein if the means for granting or denying the service of the SDV device (830) grants the service, the SDV device (830) is configured to terminate a current channel transmission from the SDV device (830) and to transmit (960) a requested channel transmission from the SDV device (830).

2. A switched digital video, SDV, device (830) comprising:
means for receiving an IGMP message requesting a channel change (920) transmitted by a first user device (284) associated with the subscriber premises, the message comprising:
i) current channel data identifying a current channel;
ii) requested channel data identifying a channel the user wishes to join; and, in addition
iii) bandwidth data identifying a bandwidth requirement for the requested channel and a bandwidth requirement for the current channel;
means for evaluating the received channel request message by comparing the bandwidth requirement of the requested channel contained within the received message with an available bandwidth for the subscriber premises; and
means for granting or denying the service of the SVD device (830) in order to prevent oversubscription for the customer premises in dependence upon the evaluation made by said evaluating means; and
wherein if the means for granting or denying the service grants the service, the SDV device (830) is configured to terminate a current channel transmission from the SDV device (830) and to transmit (960) a requested channel transmission from the SDV device (830).

3. A method performed by a switched digital video, SDV, device (830) for implementing IGMP-based channel changes in a broadcast system to prevent oversubscription, said method comprising the steps of:
receiving a channel change request message (920) transmitted by a user device (284) associated with the subscriber premises, the message comprising:
i) current channel data identifying a current channel;
ii) requested channel data identifying a channel the user wishes to join; and, in addition
iii) bandwidth data identifying a bandwidth requirement for the requested channel and a bandwidth requirement for the current channel;
evaluating the received channel request message by comparing the bandwidth requirement of the requested channel contained within the received message with an available bandwidth for the subscriber premises; and
granting or denying the service in order to prevent oversubscription for the customer premises in dependence upon the evaluation made by said evaluating step; and
wherein if the service is granted, terminating a current channel transmission from the SDV device and transmitting the requested channel transmission from the SDV device (960).

## Patentansprüche

1. System zum Implementieren IGMP-basierter Kanaländerungen in einem Rundfunksystem, um Überzeichnung zu verhindern, wobei das System aufweist:
eine Benutzervorrichtung (284), die mit einer Teilnehmereinrichtung verbunden ist, wobei die Benutzervorrichtung aufweist:
eine Einrichtung zum Empfangen einer Benutzeranfrage nach einer Änderung von einem aktuellen Kanal zu einem angeforderten Kanal; und
eine Einrichtung zum Senden, im Ansprechen auf die Benutzeranfrage, einer IGMP-Nachricht, die eine Kanaländerung durch Verlassen eines aktuellen Kanals und Beitreten zu einem angeforderten Kanal anfordert, an eine Switched Digital Video, SDV, -Vorrichtung (830), wobei die Nachricht aufweist:
i) aktuelle Kanaldaten, die den aktuellen Kanal identifizieren;
ii) angeforderte Kanaldaten, die den Kanal identifizierten, dem der Benutzer beitreten möchte; und außerdem
iii) Bandbreitendaten, die den Bandbreitenbedarf für den angeforderten Kanal und den Bandbreitenbedarf für den aktuellen Kanal identifizieren;
eine SDV-Vorrichtung (830), die aufweist:
eine Einrichtung zum Empfangen der Kanaländerungsanfragenachricht (920), die von der Benutzervorrichtung (284) gesendet wird;
eine Einrichtung zum Auswerten der empfangenen Kanaländerungsanfragenachricht durch Vergleichen des Bandbreitenbedarfs des angeforderten Kanals, der in der empfangenen Nachricht enthalten ist, mit einer für die Teilnehmereinrichtung verfügbaren Bandbreite; und
eine Einrichtung zum Zulassen oder Ablehnen des Dienstes, um Überzeichnung für die Teilnehmereinrichtung zu verhindern, in Abhängigkeit von der durch die Auswertungseinrichtung erfolgten Auswertung;
wobei, wenn die Einrichtung zum Zulassen oder Ablehnen des Dienstes der SDV-Vorrichtung (830) den Dienst zulässt, die SDV-Vorrichtung (830) konfiguriert ist zum Beenden einer Sendung von der SDV-Vorrichtung (830) auf dem aktuellen Kanal und zum Senden (960) einer Sendung von der SDV-Vorrichtung (830) auf dem angeforderten Kanal.

2. Switched Digital Video, SDV, -Vorrichtung (830) mit:
einer Einrichtung zum Empfangen einer IGMP-Nachricht, die eine Kanaländerung (920) anfordert und von einer ersten Benutzervorrichtung (284) gesendet wird, die mit der Teilnehmereinrichtung assoziiert ist, wobei die Nachricht aufweist:
i) aktuelle Kanaldaten, die den aktuellen Kanal identifizieren;
ii) angeforderte Kanaldaten, die den Kanal identifizierten, dem der Benutzer beitreten möchte; und außerdem
iii) Bandbreitendaten, die den Bandbreitenbedarf für den angeforderten Kanal und den Bandbreitenbedarf für den aktuellen Kanal identifizieren;
eine Einrichtung zum Auswerten der empfangenen Kanalanfragenachricht durch Vergleichen des Bandbreitenbedarfs des angeforderten Kanals, der in der empfangenen Nachricht enthalten ist, mit einer für die Teilnehmereinrichtung verfügbaren Bandbreite; und
eine Einrichtung zum Zulassen oder Ablehnen des Dienstes der SVD-Vorrichtung (830), um Überzeichnung für die Teilnehmereinrichtung zu verhindern, in Abhängigkeit von der durch die Auswertungseinrichtung erfolgten Auswertung;
wobei, wenn die Einrichtung zum Zulassen oder Ablehnen des Dienstes den Dienst zulässt, die SDV-Vorrichtung (830) konfiguriert ist zum Beenden einer Sendung von der SDV-Vorrichtung (830) auf dem aktuellen Kanal und zum Senden (960) einer Sendung von der SDV-Vorrichtung (830) auf dem angeforderten Kanal.

3. Verfahren, das von einer Switched Digital Video, SVD, -Vorrichtung (830) durchgeführt wird, um IGMP-basierte Kanaländerungen in einem Rundfunksystem zu implementieren, um Überzeichnung zu verhindern, wobei das Verfahren die folgenden Schritte umfasst:
Empfangen einer Kanaländerungsanfragenachricht (920), die von einer Benutzervorrichtung (284) gesendet wird, die mit der Teilnehmereinrichtung assoziiert ist, wobei die Nachricht aufweist:
i) aktuelle Kanaldaten, die den aktuellen Kanal identifizieren;
ii) angeforderte Kanaldaten, die den Kanal identifizierten, dem der Benutzer beitreten möchte; und außerdem
iii) Bandbreitendaten, die den Bandbreitenbedarf für den angeforderten Kanal und den Bandbreitenbedarf für den aktuellen Kanal identifizieren;
Auswerten der empfangenen Kanalanfragenachricht durch Vergleichen des Bandbreitenbedarfs des angeforderten Kanals, der in der empfangenen Nachricht enthalten ist, mit einer für die Teilnehmereinrichtung verfügbaren Bandbreite; und
Zulassen oder Ablehnen des Dienstes, um Überzeichnung für die Teilnehmereinrichtung zu verhindern, in Abhängigkeit von der im Auswertungsschritt erfolgten Auswertung;
wobei, wenn der Dienst zugelassen wird, das Beenden einer Sendung von der SDV-Vorrichtung auf dem aktuellen Kanal und das Senden einer Sendung von der SDV-Vorrichtung auf dem angeforderten Kanal erfolgt.

## Revendications

1. Système d'implémentation de changements de canal à base d'IGMP au sein d'un système de diffusion générale pour empêcher un surabonnement, ledit système comprenant :
un dispositif utilisateur (284) associé à des locaux d'abonné, le dispositif utilisateur comprenant :
- un moyen pour recevoir une demande d'utilisateur pour un changement d'un canal actuel à un canal demandé ; et
- un moyen, en réponse à la demande utilisateur, pour transmettre vers un dispositif vidéo numérique commuté, SDV (830), un message IGMP demandant un changement de canal en laissant un canal actuel et en rejoignant un canal demandé (920), le message comprenant :
i) des données de canal actuel identifiant le canal actuel ;
ii) des données de canal demandé identifiant le canal que l'utilisateur souhaite rejoindre ; et, en outre,
iii) des données de largeur de bande identifiant une exigence en termes de largeur de bande pour le canal demandé et une exigence en termes de largeur de bande pour le canal actuel ;
un dispositif SDV (830) comprenant :
- un moyen pour recevoir le message de demande de changement de canal (920) transmis par le dispositif utilisateur (284) ;
- un moyen pour évaluer le message de demande de changement de canal reçu en comparant l'exigence en termes de largeur de bande du canal demandé contenu au sein du message reçu à une largeur de bande disponible pour les locaux d'abonné ; et
- un moyen pour accorder ou refuser le service afin d'empêcher un surabonnement pour les locaux d'abonné en fonction de l'évaluation faite par ledit moyen d'évaluation ;
dans lequel si le moyen pour accorder ou refuser le service du dispositif SDV (830) accorde le service, le dispositif SDV (830) est configuré pour terminer la transmission de canal actuel à partir du dispositif SDV (830) et transmettre (960) une transmission de canal demandé à partir du dispositif SDV (830).

2. Dispositif vidéo numérique commuté, SDV (830), comprenant :
un moyen pour recevoir un message IGMP demandant un changement de canal (920) transmis par un premier dispositif utilisateur (284) associé aux locaux d'abonné, le message comprenant :
i) des données de canal actuel identifiant un canal actuel ;
ii) des données de canal demandé identifiant le canal que l'utilisateur souhaite rejoindre ; et, en outre,
iii) des données de largeur de bande identifiant une exigence en termes de largeur de bande pour le canal demandé et une exigence en termes de largeur de bande pour le canal actuel ;
un moyen pour évaluer le message de demande de canal reçu en comparant l'exigence en termes de largeur de bande du canal demandé contenu au sein du message reçu à une largeur de bande disponible pour les locaux d'abonné ; et
un moyen pour accorder ou refuser le service du dispositif SDV (830) afin d'empêcher un surabonnement pour les locaux d'abonné en fonction de l'évaluation faite par ledit moyen d'évaluation ; et
dans lequel si le moyen pour accorder ou refuser le service accorde le service, le dispositif SDV (830) est configuré pour terminer la transmission de canal actuel à partir du dispositif SDV (830) et transmettre (960) une transmission de canal demandé à partir du dispositif SDV (830).

3. Procédé réalisé par un dispositif vidéo numérique commuté, SDV (830), pour implémenter des chargements de canal à base d'IGMP dans un système de diffusion générale pour empêcher un surabonnement, ledit procédé comprenant les étapes consistant à :
recevoir un message de demande de changement de canal (920) transmis par un dispositif utilisateur (284) associé aux locaux d'abonné, le message comprenant :
i) des données de canal actuel identifiant un canal actuel ;
ii) des données de canal demandé identifiant le canal que l'utilisateur souhaite rejoindre ; et, en outre,
iii) des données de largeur de bande identifiant une exigence en termes de largeur de bande pour le canal demandé et une exigence en termes de largeur de bande pour le canal actuel ;
évaluer le message de demande de canal reçu en comparant l'exigence en termes de largeur de bande du canal demandé contenu au sein du message reçu à une largeur de bande disponible pour les locaux d'abonné ; et
accorder ou refuser le service afin d'empêcher un surabonnement pour les locaux d'abonné en fonction de l'évaluation faite par ladite étape d'évaluation ; et
dans lequel si le service est accordé, terminer une transmission de canal actuel à partir du dispositif SDV et transmettre la transmission de canal demandé à partir du dispositif SDV (960).
